# EUROPÄISCHE PATENTANMELDUNG

(11) **EP 4 527 590 A2**
(43) Veröffentlichungstag der Anmeldung: **26.03.2025**
(21) Anmeldenummer: 24201087.4
(22) Anmeldetag: 18.09.2024
(51) Int. Cl.: B29C 53/08, B29C 53/82

(54) **BIEGEDORN FÜR THERMOPLASTISCHES ROHRMATERIAL, BIEGEMASCHINE SOWIE VERFAHREN ZUM BIEGEN VON SOLCHEM ROHRMATERIAL**

(30) Priorität: 19.09.2023 DE 102023125375
(71) Anmelder: WAFIOS Aktiengesellschaft, 72764 Reutlingen (DE)
(72) Erfinder: SCHOSER, Bernd, 72820 Sonnenbuehl (DE); PANDTLE, Julian, 72379 Hechingen (DE)
(74) Vertreter: Patentanwälte Geyer, Fehners & Partner mbB

(57) **Zusammenfassung**

Es wird beschrieben ein Biegedorn für thermoplastisches, einen Innenquerschnitt aufweisendes Rohrmaterial (4), der einen Dornkopf (18), welcher gegenüber einer Längsachse biegbar ist, um während eines Biegevorgangs das Rohrmaterial (4) im Innenquerschnitt zu stabilisieren, aufweist, wobei eine Schalteinrichtung (26) vorgesehen ist, die auf den Dornkopf (18) wirkt und den Dornkopf (18) zum Abstützen des erwärmten Rohrmaterials (4) beim Transport in einen mindestens gegenüber der Vertikalen biegesteifen Zustand bringt.

## Beschreibung

Die Erfindung bezieht sich auf einen Biegedorn für thermoplastisches, einen Innenquerschnitt aufweisendes Rohrmaterial, der einen Dornkopf, der gegenüber einer Längsachse verformbar ist, um während eines Biegevorgangs das Rohrmaterial im Innenquerschnitt zu stabilisieren, aufweist. Die Erfindung bezieht sich weiter auf eine Biegemaschine und ein Verfahren zum Biegen von thermoplastischem, einen Innenquerschnitt aufweisendem Rohrmaterial, das abschnittsweise in einer Biegestation gebogen und während eines Biegevorgangs im Innenquerschnitt mit einem Biegedorn stabilisiert wird, wobei das Rohrmaterial zuvor in dem als nächsten zu biegenden Abschnitt erwärmt und dann zur Biegestation verschoben wird.

Rohrmaterial aus thermoplastischem Kunststoff oder thermoplastischem Faserverbundkunststoff muss vor dem Biegen erwärmt und dadurch erweicht werden. Weiter ist es erforderlich, das Rohrmaterial im Innenquerschnitt zu stabilisieren, damit es nicht gequetscht oder eingeschnürt wird, wenn eine Biegung ausgeführt wird.

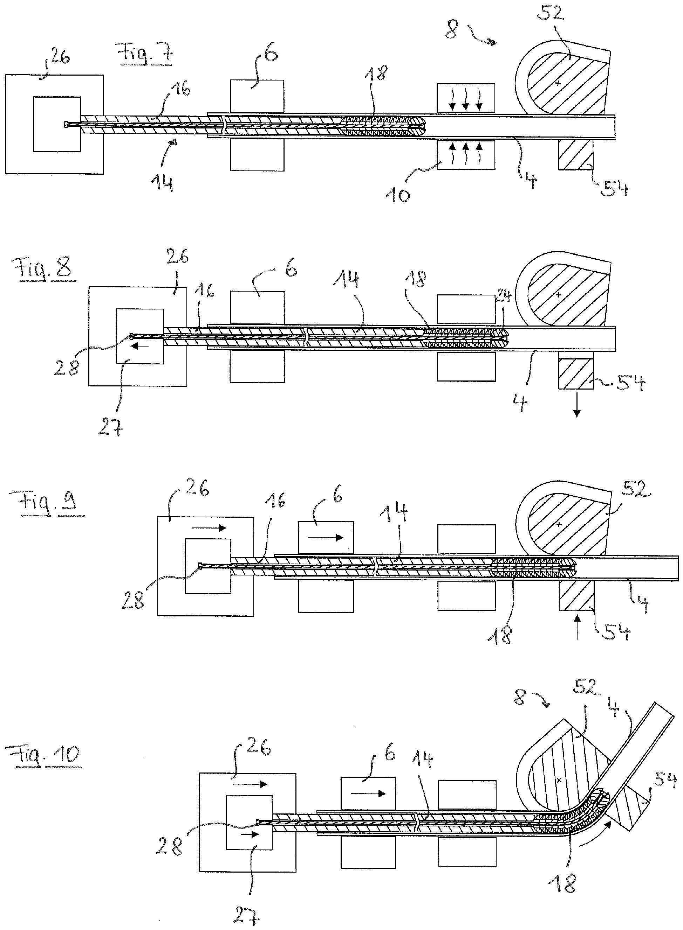

Die gattungsbildende DE 10 2012 005 973 A1 offenbart für die Stabilisierung im Innenquerschnitt den eingangs genannten Biegedorn, der einen Dornkopf aufweist, der gegenüber einer Längsachse verformbar ist. Er ist z.B. an einer Führungsstange angebracht und liegt während des Biegeprozesses in dem Abschnitt des Rohres, das gebogen wird. Er ist allseitig biegbar, so dass er Biegungen des Rohrmaterials in allen möglichen Richtungen folgen kann, um das Rohrmaterial im Innenquerschnitt zu stabilisieren. Die Fig. 7c bis 7h der Veröffentlichung zeigen verschiedene Möglichkeiten für einen entsprechenden allseitig biegbaren Dornkopf. Er kann beispielsweise als Schuppendorn ausgebildet sein.

Da das Rohrmaterial durch die Erwärmung an Steifheit verliert, besteht das Problem, dass das erwärmte und erweichte Material während des Transports von einer Heiz- zu einer Biegeeinrichtung gestützt werden muss. Die DE 10 2018 003 235 A1 sieht es vor, das erwärmte Rohrmaterial während eines solchen Transports von außen abzustützen, beispielsweise durch geeignete Mehrachsroboter.

Ausgehend hiervon liegt der Erfindung die Aufgabe zugrunde, das Biegen von Kunststoffrohren zu vereinfachen und insbesondere eine möglichst freie Biegbarkeit bei gleichzeitig guter Abstützung des erwärmten und erweichten thermoplastischen Rohrmaterials zu erreichen.

Die Erfindung ist in den Ansprüchen 1 und 13 definiert. Die abhängigen Ansprüche definieren bevorzugte Weiterbildungen.

Die Erfindung sieht einen Biegedorn der eingangs genannten Art vor. Er ist für thermoplastisches Rohrmaterial ausgebildet, das einen Innenquerschnitt aufweist. Der Biegedorn verfügt über einen Dornkopf, der einen biegeschlaffen Zustand hat, in dem er in mindestens einer Ebene (bevorzugt allseitig) gegenüber einer Längsachse biegbar ist. In diesem Zustand kann er das Rohrmaterial im Innenquerschnitt während des mindestens einen Biegevorgangs stabilisieren, da er in der Lage ist, der entstehenden Biegung zu folgen. Der Dornkopf hat weiter einen biegesteifen Zustand, in dem er mindestens in der Vertikalen (bevorzugt allseitig) biegesteif ist. Der Biegedorn verfügt über eine Schalteinrichtung, die auf den Dornkopf wirkt und diesen zum Abstützen des erwärmten Rohrmaterials in den mindestens in der Vertikalen biegesteifen Zustand bringt. Die Schalteinrichtung schaltet weiter den Dornkopf zum Ausführen der Biegung in den biegeschlaffen Zustand, in dem er mindestens in einer Ebene biegeschlaff ist. Dies ist dann die Biegeebene, in der die Biegung ausgeführt werden soll. Die Schalteinrichtung schaltet somit den Dornkopf zum Vorschub des erwärmten Rohrmaterials in den mindestens gegenüber der Vertikalen biegesteifen Zustand und zum Ausführen der Biegung nach dem Vorschub in den biegeschlaffen Zustand, in dem er, mindestens in der Ebene, in der die Biegung liegt, biegeschlaff ist, bevorzugt allseitig biegeschlaff.

Durch diese Ausgestaltung des Dornkopfes erfolgt im biegesteifen Zustand eine Innenstabilisierung des Rohrmaterials, wenn dieses erwärmt und erweicht ist. Diese Innenstabilisierung wird durch den Biegedorn realisiert, der nun eine Doppelfunktion erhält. Einerseits stabilisiert erwenn im biegeschlaffen Zustand - den Innenquerschnitt des Rohrmaterials während des Biegevorgangs, wie es bei bekannten Biegedornen auch der Fall ist. Anderseits stützt er das Rohrmaterial in der Vertikalen ab, wenn er in den biegesteifen Zustand gebracht ist, in dem er sich i.d.R. längs der Längsachse erstreckt. Eine Außenabstützung durch aufwendige Mehrachsroboter ist damit nicht mehr erforderlich. Gleichzeitig ist es nun auch einfach möglich, vergleichsweise dünnwandigere Rohrmaterialien zu bearbeiten, die bei der Abstützung von außen problematisch waren, da sie dabei eingeschnürt werden konnten. Der Biegedorn bewirkt also zum einen die (herkömmliche) Stabilisierung des Innenquerschnitts während des Biegevorgans und andererseits nun zusätzlich das Abstützen des erwärmten und erweichten Rohrmaterials während des Transports, beispielsweise zur Biegeeinheit. Dadurch ist eine anderweitige Abstützung des Rohrmaterials nicht mehr erforderlich, der Aufwand sinkt, und Ausschuss wird reduziert.

Für den biegesteifen Zustand mit der abstützenden Wirkung sind zwei Varianten möglich. In einer ersten Variante ist der Dornkopf so ausgestaltet, dass er von der Schalteinrichtung zwischen einem allseits biegbaren Zustand und dem biegesteifen Zustand, in dem der Dornkopf sich längs der Längsachse erstreckt, umgeschaltet wird.

In einer zweiten Variante ist der Dornkopf stets teilweise biegesteif. "Teilweise" meint, er ist mindestens in einer Ebene biegesteif und mindestens in einer anderen Ebene biegbar. Diese seien nachfolgend als versteifte Ebene bzw. flexible Ebene bezeichnet. In der versteiften Ebene kann der Dornkopf nicht gebogen werden, in der flexiblen Ebene hingegen schon. Zum Transport, d.h. zum Abstützen des Rohrmaterials, wird der Dornkopf so rotiert, dass die versteifte Ebene mit der Vertikalen zusammenfällt, d.h. der Dornkopf stützt das Rohrmaterial gegenüber der Vertikalen. Dass der Dornkopf dabei z.B. in der Horizontalen biegbar bleibt, ist ohne weitere Auswirkungen, da die Haupteinwirkungskräfte auf das erweichte Rohrmaterial von der Schwerkraft herrühren, also längs der Vertikalen wirken. Zum Biegen wird hingegen der Dornkopf so rotiert, dass die flexible Ebene mit der Ebene, in der die Biegung ausgeführt wird, zusammenfällt. Diese Biegeebene ist in der Biegemaschine nicht die Vertikale, sondern meist die Horizontale (und das Rohrmaterial wird ggf. von einer Rohrzange passend rotiert). Der Dornkopf kann somit unproblematisch während der Biegung der Verformung des Rohrmaterials folgen und das Rohrmaterial im Innenquerschnitt stabilisieren, ohne der Biegekraft entgegenzuwirken.

Die erstgenannte Variante lässt sich dadurch realisieren, dass der Dornkopf durch Aufbringen einer Zugkraft biegesteif gemacht wird, indem einzelne Glieder des Dornkopfes gegeneinander verspannt werden. Alternativ dazu wird ein Stützelement in den Dornkopf ein- oder über den Dornkopf aufgeschoben. Eine Kombination ist natürlich auch möglich. Für das Verspannen lässt sich besonders zweckmäßig ein Führungsseil verwenden, das dann als Zugseil wirkt und ein Kopfstück des Dornkopfs so nach hinten zieht, dass die weiteren Elemente des Dornkopfs (Glieder oder Schuppen) keine Bewegung mehr ausführen können und sich zwangsläufig auf der kürzesten Strecke, welche eine Gerade ist, aneinanderlegen und von dieser Stellung nicht mehr abweichen können.

Eine Biegemaschine gemäß der Erfindung weist den Biegedorn sowie die Schalteinrichtung zum Umschalten des Dornkopfs auf. Bei einem entsprechenden Biegeverfahren wird der Biegedorn verwendet.

Bevorzugt umfasst der Biegedorn auch einen Dornantrieb zum Längsverschieben der Biegedorns und die Schalteinrichtung ist mit dem Dornantrieb zu einer Baugruppe zusammengefasst - besonders bevorzugt ist die Schalteinrichtung im Dornantrieb integriert. Der Dornantrieb kann auch der Biegemaschine zugeordnet werden.

Bei einem Biegeverfahren wird der Dorn verwendet. Ausführungsformen des Verfahrens umfassen die folgenden Schritte: Erwärmen eines Abschnitts des Rohrmaterials, der zu einer in einer Biegeebene liegenden Biegung gebogen werden soll; Transportieren des Rohrmaterials zu einer Biegestation; Abstützen des Abschnitts mittels des Dorns mit einem in den Innenquerschnitt entlang des Abschnitts eingeführten Dornkopf, wobei sich der Dornkopf in einem zumindest in der Vertikalen biegesteifen Zustand befindet; Umschalten des Dornkopfs in einen zumindest in der Biegeebene flexiblen Zustand, und Biegen des Rohrmaterials zu der Biegung im Abschnitt. Bei diesem Verfahren wird der Dorn zwischen dem starren Zustand, der für den Transport des erwärmten Rohrmaterials verwendet wird, und dem flexiblen Zustand, der zum Biegen verwendet wird, umgeschaltet. Diese Umschaltung wird durch Einwirkung auf den Dornkopf vorgenommen. Dies kann durch Änderung der mechanischen Eigenschaften des Kopfes oder durch Drehen eines Dornkopfes mit anisotropen Flexibilitätseigenschaften (wie oben erwähnt) geschehen.

Darüber hinaus kann der Dorn zwischen dem starren Zustand, der für den Transport des erwärmten Rohrmaterials verwendet wird, und dem flexiblen Zustand, der zum Biegen verwendet wird, umgeschaltet werden, ohne dass Eigenschaften des Dornkopfes verändert oder der Dornkopf gedreht wird. Ein solches Verfahren umfasst die folgenden Schritte: Erwärmen eines Abschnitts des Rohrmaterials, der zu einer in einer Biegeebene liegenden Biegung gebogen werden soll; Transportieren des Rohrmaterials zu einer Biegestation; während des Transportieren Abstützen des Abschnitts mittels eines Dorns mit einer starren Führungsstange und einem flexiblen Dornkopf, wobei der Dorn so positioniert ist, dass sich die starre Führungsstange im Abschnitt befindet und der flexible Dornkopf außerhalb des Abschnitts liegt; Einführen des Abschnitts in die Biegestation und Stabilisieren des Abschnitts gegen die Vertikale mittels der Biegestation; Verschieben des Dornkopfes in den stabilisierten Abschnitt, und Biegen des Rohrmaterials zur Biegung in dem Abschnitt. In diesen Ausführungsformen kann der Dornkopf konventionell sein, wird aber in seiner Längsposition in besonderer Weise gesteuert. Zur Stabilisierung des Rohrmaterials in dem beheizten Abschnitt ist in diesem Abschnitt die starre Führungsstange angeordnet. Das bedeutet, dass der flexible Dornkopf über den Abschnitt hinausgeschoben wird, d.h. im Vergleich zum Normalbetrieb zu weit heraus. Sobald der Abschnitt in der Biegestation liegt und abgestützt ist, wird der Dorn zurückgezogen, so dass sich der flexible Kopf im Abschnitt befindet. Dann kann der Biegevorgang durchgeführt werden.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1: eine Biegemaschine für Kunststoffrohre mit einer Erwärmungsvorrichtung und einem Biegedorn,
- Fig. 2 - 4: verschieden Ausführungsformen für den Biegedorn zum Abstützen erweichten Rohrmaterials,
- Fig. 5 - 6: Biegedorn mit Aufweitungselementen zum Abstützen des Rohrmaterials gegen Verdrehungen und
- Fig. 7 - 10: verschiedene Zustände des Beigedorns der Fig. 2, die beim Biegen der Kunststoffrohrs vorliegen.

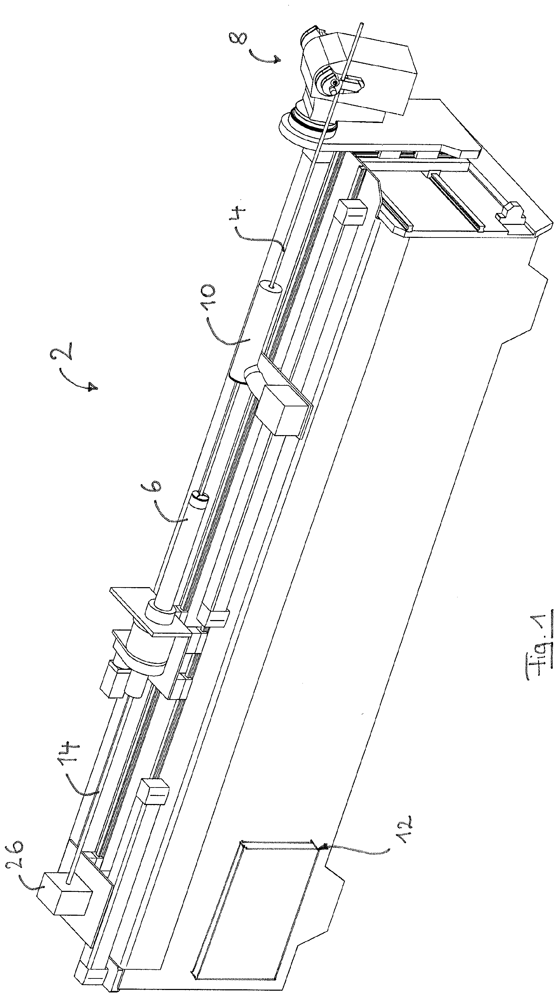

Fig. 1 zeigt schematisch eine Biegemaschine 2 zum Biegen von thermoplastischen Kunststoffrohren 4. Das rohrförmige Material 4 wird von einer Rohrzange 6 gehalten und zum Biegen so gedreht, dass die Biegungen, welche von der Biegeeinrichtung 8 der Biegemaschine 2 im Wesentlichen in der Horizontalen ausgeführt werden, im Werkstück in einer gewünschten Ebene liegen. Am Ende der Biegemaschine 2 befindet sich die Biegeeinheit 8, die das Kunststoffrohr 4 biegt. Ihr vorgelagert ist eine Erwärmungseinrichtung 10, die das Rohrmaterial 4 aufheizt, damit es gebogen werden kann. Die Erwärmungseinrichtung 10 erwärmt das Rohrmaterial 4 auf die für den Biegeprozess notwendige Temperatur. Es wird dann der Biegeeinheit 8 zum Biegen zugeführt.

Die Biegemaschine 2 führt das Werkstück, ein thermoplastisches Rohrmaterial 4, auf einem als Innendorn wirkenden Biegedorn 14, der ins Innere des Kunststoffrohrs eingeschoben wird. Der Biegedorn 14 stützt das thermoplastische Material. Anders als Metallrohrmaterial muss das thermoplastische Kunststoffmaterial 4 erwärmt werden, damit es biegbar ist. Dadurch verliert es naturgemäß seine Steifheit zu einem gewissen Grade.

Die Erwärmung der Erwärmungseinrichtung 10 erfolgt in einem Abschnitt des Rohrmaterials 4, an dem eine spätere Biegung ausgeführt wird. Ein solcher Längenabschnitt des Rohrmaterials 4 wird erwärmt und dann zur Biegeeinheit 8 vorgeschoben, die die Biegung am erwärmten und thermoplastisch erweichten Kunststoffmaterial ausführt. Der Biegedorn 14 stützt das Kunststoffrohrmaterial während des Transports insbesondere in dem Längenabschnitt ab, der in der Erwärmungseinrichtung 10 erwärmt wurde. In der Biegemaschine 2 der Fig. 1 ist der Transport ein Vorschieben entlang der Längsachse, die durch das Maschinenbett gegeben ist. Bei andersartigen Biegemaschinen kann der Transport anders ablaufen. Darauf wird später noch eingegangen werden. Während des Transports wird die erwärmte Stelle durch den Innendorn 14 stabilisiert.

Der Betrieb der Biegemaschine 2 und insbesondere die Verschiebung der Rohrzange 6 über deren nicht weiter bezeichneten Antrieb und die Ansteuerung der Biegeeinheit 8 erfolgt durch eine Steuereinrichtung 12, die beispielsweise einen Prozessor aufweist und über eine Schnittstelle zur Eingabe eines Biegeprogramms, nach dem die Biegemaschine 2 dann arbeitet, verfügt.

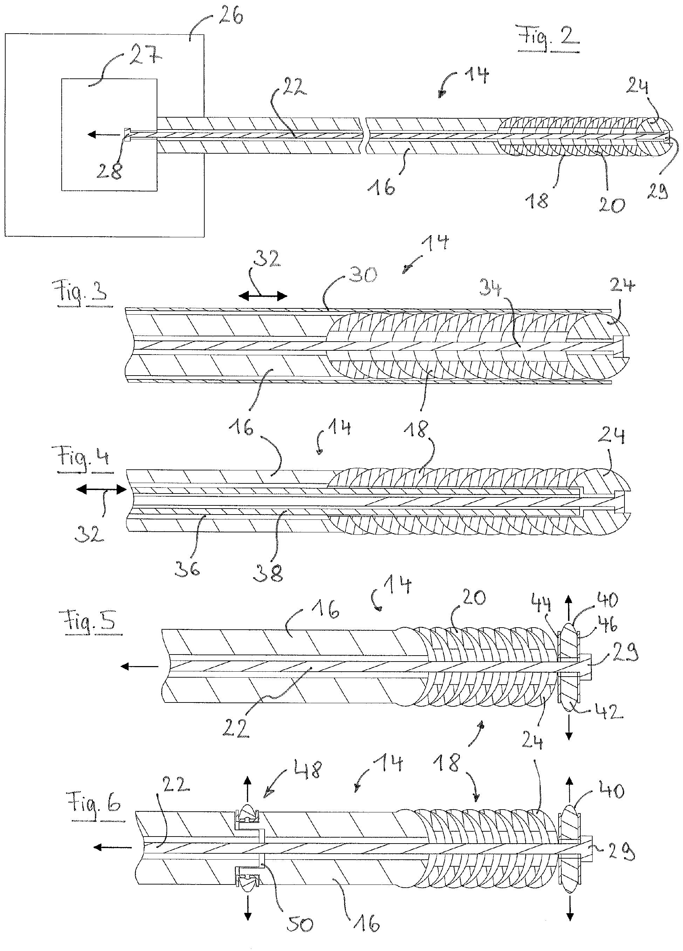

Fig. 2 zeigt in schematischer Schnittdarstellung ein Ausführungsbeispiel für den Biegedorn 14. Er umfasst eine Führungsstange 16 sowie einen Dornkopf 18, der allseitig gegenüber der Längsachse, welche von der Führungsstange 16 festgelegt ist, verformbar ist. Diese Verformung ermöglicht es, dass der Dornkopf 18 in dem Abschnitt des Rohrmaterials 4 liegt, der von der Biegeeinheit 8 umgeformt wird. Die Beweglichkeit des Dornkopfs 18 erlaubt es, dass dieser während des Biegeprozesses der entstehenden Biegung des Rohrs folgt und dabei das Rohrmaterial 4 im Innenquerschnitt stabilisiert, so dass es nicht gequetscht oder eingeschnürt wird.

Derartig bewegliche Dornköpfe sind bekannt, z.B. aus der DE 10 2012 005 973 A1. Sie können hier zur Anwendung kommen, sind allerdings nun versteifbar ausgestaltet. Der Dornkopf 18 des in Fig. 2 gezeigten Biegedorns 14 ist exemplarisch als Schuppendorn ausgeführt. Er besteht aus einzelnen Schuppen 20 und hat ein Zugseil 22, das vom Kopfstück 24 des Dornkopfs 18 durch den Dornkopf 18 und die Führungsstange 16 bis zu deren hinteren, d.h. fußseitigem Ende verläuft. Dieses Ende liegt im Dornantrieb 26, der, wie Fig. 1 zeigt, längs der Längsachse der Biegemaschine 2 verschiebbar ist, um den Dorn 14 gegenüber der Rohrzange 6 und damit dem Kunststoffrohr 4 verschieben zu können. Der Dornantrieb 26 wird durch die Steuereinrichtung 12 gesteuert.

Der Biegedorn 14 verfügt zudem über eine Einrichtung zum Versteifen des Dornkopfs 18, so dass dieser biegesteif wird und die Führungsstange 16 entlang deren Längsachse fortsetzt. Im oder am Dornantrieb 26 ist dazu eine Schalteinrichtung 27 vorgesehen, die das Zugseil 22 anspannt, indem sie den Zugseilfuß 28 in Richtung des in Fig. 2 schematisch gezeigten Pfeiles aus dem fußseitigen Ende der Führungsstange 16 herauszieht bzw. unter Spannung setzt, so dass der am anderen Ende im Kopfstück 24 verankerte Zugseilkopf 29 das Kopfstück 24 und die Schuppen 20 des Dornkopfs 18 auf die Führungsstange 16 hin verspannt und dadurch den Dornkopf 18 versteift. In diesem Zustand kann sich der Dornkopf 18 nicht mehr biegen, sondern bildet eine biegesteife, gerade Stangenform aus. Dazu müssen die Schuppen 20 keine besondere Ausführung erhalten, solange die Verkürzung im Zentrum (Spannung im Zugseil 22) den Dornkopf in die Gerade zieht. Bevorzugt haben die Schuppen oder Glieder (im Falle eines Gliederdorns) jedoch zusätzlich eine Zentrierstruktur, die bei Zugspannung die Schuppen oder Glieder zusätzlich entlang einer Gerade ausrichtete.

Der biegesteife Zustand des Dornkopfs 18 wird durch die Schalteinrichtung 27 unter Ansteuerung durch die Steuereinrichtung 12 dann eingestellt, wenn ein erwärmter Abschnitt des Rohrmaterials 4 abgestützt werden soll, beispielsweise wenn ein solcher Abschnitt, der in der Erwärmungseinrichtung 10 erwärmt wurde, zur Biegeeinheit 8 vorgeschoben wird. Ist er in der Biegeeinheit 8 angelangt, löst die Schalteinrichtung 27 die Versteifung, d.h. in Fig. 2 die Spannung im Zugseil 22, und der Dornkopf 18 kann der nun folgenden Biegung, welche die Biegeeinheit 8 am Rohrmaterial 4 ausführt, folgen und die im Innenquerschnitt stabilisierende Wirkung entfalten.

Das Prinzip eines Biegedorns 14, der einen Dornkopf 18 aufweist, welcher zwischen einem biegesteifen Zustand und einem biegeschlaffen Zustand umgeschaltet werden kann, kann alternativ zur Ausführungsform der Fig. 2 auch durch andere Maßnahmen erreicht werden. In Fig. 3 ist eine Ausgestaltung gezeigt, die eine in Längsrichtung außen über die Führungsstange 16 und den Dornkopf 18 schiebbare Stabilisierungshülse 30 aufweist. Wenn diese in Richtung des Doppelpfeiles 32 bis zum Kopfstück 24 vorgeschoben ist, ist der gesamte Dornkopf 18 biegesteif. Das Verschieben der Stabilisierungshülse 30 erlaubt es, anders als bei der Variante der Fig. 2, auch den Dornkopfs 18 auch nur in Teilen zu versteifen, je nachdem wie weit die Stabilisierungshülse 30 über den Dornkopf 18 vorgeschoben ist. Der Antrieb der Stabilisierungshülse 30 erfolgt wiederum durch die Schalteinrichtung 27 im/am Dornantrieb 26. Anders als in Fig. 2 ist das im Inneren des Dornkopfs 18 und der Führungsstange 16 verlaufende Seil nunmehr kein Zugseil, sondern ein reines Führungsseil 34, das nicht mehr von der Schalteinrichtung 27 verspannt oder gelöst wird. Zum Schalten in den biegeschlaffen Zustand zieht die Schalteinrichtung die Stabilisierungshülse 30 in Richtung des Doppelpfeiles 32 zurück.

Die Führungshülse 30 muss den Dornkopf 18 nicht allseitig umgeben. Es ist durchaus auch möglich, die Führungshülse 30 beispielsweise in Form eines schraubenförmig umlaufenden Bauteils oder als mit einem durchgehenden seitlichen Schlitz verlaufendes geschlitztes, hülsenförmiges Bauteil auszugestalten.

Bei der Bauweise der Fig. 4 wird statt der außenliegenden Stabilisierungshülse 30 eine innen liegende Versteifungshülse 38 30 in Richtung des Doppelpfeiles 32 durch eine längserstreckte Öffnung 36 in die Führungsstange 16 und in den Dornkopf 18 bis zum Kopfstück 24 vorgeschoben oder zurückgezogen wird, um den Dornkopf 18 biegesteif bzw. biegeschlaff zu schalten. Bei passender Ausgestaltung ist auch eine Druckbeaufschlagung mittels Druckfluid oder Pressluft möglich, um die Versteifung zu erreichen.

Natürlich können die Bauweisen der Fig. 2 und 3, 2 und 3, 3 und 4, bzw. 4 und 3 und 2 auch kombiniert werden, um eine besonders starke Versteifung des Dornkopfs 18 zu erreichen.

Weiter ist es für alle Ausführungsformen möglich, den Dornkopf 18 auch als Gliederdornkopf auszugestalten oder in Form eines elastischen Federelementes zu gestalten, das durch Zugspannung oder Versteifungselemente biegesteif geschaltet werden kann.

Die Fig. 5 und 6 zeigen Ausgestaltungen des Biegedorns 14 mit einem zusätzlichen Element, das an der Spitze des Dornkopfs 18 (Fig. 5) vorgesehen ist bzw. alternativ oder zusätzlich im Bereich der Führungsstange 16 (Fig. 6). Es handelt sich um ein Aufweitungselement, das sich radial weitet, wenn der Dornkopf 18 biegesteif geschaltet ist, indem das Zugseil 22 unter Spannung gesetzt wird. In den Ausführungsbeispielen der Fig. 5 ist das Aufweitungselement 40, welches an der Spitze des Dornkopfs 18 vorgesehen ist, durch eine Elastomerplatte 42 gebildet, welche von zwei Lochscheiben 44, 46 eingefasst und durch die Spannung des Zugseils 22 gequetscht und damit radial geweitet wird. Dies dient dazu, den Dornkopf 18 im Rohrinneren zu verspannen und gegen Torsionskräfte abzustützen. Das alternativ oder zusätzlich vorgesehene Aufweitungselement 48 dient demselben Zweck. Es liegt im Bereich einer Teilungsstelle 50 der Führungsstange 16, die so gestaltet ist, dass die Führungsstange 16 zwar ihre Längsführungseigenschaft beibehält, jedoch in axialer Richtung gestaucht werden kann, um das Aufweitungselement 48 durch Spannung, welche das Zugseil 22 ausführt, radial aufzuweiten und so den Biegedorn 14 im Inneren des Rohrmaterials 4 an einer anderen (oder zweiten) Stelle zu verspannen.

Die Fig. 7 bis 10 zeigen den Einsatz des versteifbaren Dornkopfs 18 bei einem Biegeprozess. Im Zustand der Fig. 7 ist das Rohrmaterial 4 in die Biegemaschine 2 eingelegt und wird an seinem hinteren (der Biegeeinheit abgewandten) Ende von der Rohrzange 6 und an seinem vorderen durch die Biegeeinheit 8 gehalten, da das Rohrmaterial 4 an eine Biegescheibe 52 von einer geschlossenen Spannbacke 54 angedrückt wird. In diesem Zustand erwärmt die Erwärmungseinrichtung 10 einen Abschnitt des Rohrmaterials 4. Der Biegedorn 14 ist vom Dornantrieb 26 so eingestellt, dass der Dornkopf 18 noch nicht im Bereich der Erwärmungseinrichtung 10 liegt. Dies ist zwar optional, hat jedoch den Vorteil, dass die Erwärmungseinrichtung 10 ausschließlich das Rohrmaterial 4 erwärmen muss und keine Wärme an den innenliegenden Dornkopf 18 abgeführt wird, d.h. keine Wärme durch den Dornkopf 18 abgeführt wird.

Ist das Rohrmaterial 4 ausreichend an seine Plastifizierungsgrenze erwärmt, schiebt zuerst der Dornantrieb 26 den gesamten Biegedorn 14 so weit vor, dass der Dornkopf 18 im nun erwärmten und erweichten Abschnitt des Rohrmaterials 4 liegt. Dieser Zustand ist in Fig. 8 erreicht. Anschließend wird, wie Fig. 8 durch einen Pfeil andeutet, von der Schalteinrichtung 27 der Zugseilfuß 28 gegenüber der Führungsstange 16 gespannt, wodurch das Kopfstück 24 auf die Führungsstange 16 hin gespannt und der Dornkopf 18 versteift wird. Nun kann die Spannbacke 54 gelöst werden und das Kunststoffrohr 4 und der Biegedorn 14 werden synchron vorgeschoben, bis der erwärmte Abschnitt des Rohrmaterials 4 im Bereich der Biegeeinheit 8, d.h. der Biegescheibe 52 und der Spannbacke 54 zu liegen kommt, die dann geschlossen wird. Damit das Rohrmaterial 4 und der Biegedorn 14 synchron vorgeschoben werden, werden die Rohrzange 6 und der Dornantrieb 26 entsprechend synchron betätigt. Der Dornkopf 18 bleibt dabei biegesteif, d.h. die Schalteinrichtung hält weiterhin den Zugseilfuß unter Spannung gegenüber der Führungsstange 16.

Zum anschließenden Biegen wird diese Spannung jedoch gelöst, d.h. die Schalteinrichtung 27 schaltet den Dornkopf 18 biegeschlaff. Z.B. löst sie den Zugseilfuß 28. Die Biegeeinheit 8 führt nun eine Biegung aus, der der nun biegeschlaffe Dornkopf 18 folgt und dabei im Innenquerschnitt das Kunststoffrohr stabilisiert. Natürlich werden passend zum Biegeprozess das Rohrmaterial 4 und der Biegedorn 14 entsprechend nachgeführt, was durch eine entsprechende Ansteuerung von Rohrzange 6 und Dornantrieb 26 erfolgt.

Ist die Biegung erfolgt, kann der Biegedorn 14 zurückgezogen werden, um einen erneuten Ablauf der Vorgänge gemäß Fig. 7 bis 10 auszuführen, wenn eine weitere Biegung am Werkstück, nämlich dem Rohrmaterial 4 ausgeführt werden soll.

Die Fig. 8 bis 9 zeigen, dass der Dornkopf 18 das Rohrmaterial 4, nachdem es in der Erwärmungseinrichtung 10 erwärmt und plastifiziert wurde, gegenüber der Vertikalen stabilisiert, so dass es während des Vorschubs nicht nach unten durchhängen kann. Dies wird in der Ausführungsform der Fig. 7 bis 10 dadurch erreicht, dass der Dornkopf 18 zwischen einem allseits biegeschlaffen Zustand und einem allseits biegesteifen Zustand geschaltet wird und für die Biegung wieder in einen biegeschlaffen Zustand.

Es ist jedoch in Ausführungsformen vorgesehen, die Biegesteifigkeit nur gegenüber der Vertikalen zu realisieren. Dies ist in einer (nicht dargestellten) Ausgestaltung dadurch erreicht, dass der Biegekopf 18 so ausgestaltet ist, dass er in einer (die Längsrichtung enthaltenen) Ebene biegesteif, in allen anderen jedoch biegeschlaff ist. Zur Stabilisierung des Rohrmaterials 4 wird dann im Zustand, der der Fig. 8 entspricht, der Biegedorn 14 durch die Schalteinrichtung 27 so um seine Längsachse rotiert, dass die biegesteife Ebene des Dornkopfs 18 mit der Vertikalen zusammenfällt. Wird anschließend der Vorschub gemäß Fig. 9 ausgeführt, ist das Rohrmaterial ausreichend stabilisiert. Um dann wie in Fig. 10 die Biegung auszuführen, wird der Biegedorn 14 so rotiert, dass die biegesteife Ebene mit der Ebene zusammenfällt, in der die Biegung liegt. In der Darstellung der Fig. 10 wäre das die Zeichenebene. Da der Dornkopf 18 nur gegenüber Biegungen biegesteif ist, die aus der Ebene hinausführen würden, kann der Dornkopf 18 Biegungen, die ausschließlich in dieser Ebene verlaufen, unproblematisch folgen und beim Biegen den Innenquerschnitt des Rohrmaterials 4 stabilisieren.

Das Umschalten durch die Schalteinrichtung 27 erfolgt in dieser Ausgestaltung also durch ein Rotieren des Biegedorns 14 derart, dass zum Stabilisieren des Rohrmaterials 4 die Ebene, in der der Dornkopf 18 biegesteif ist, mit der Vertikalen zusammenfällt. Während des Biegevorgangs ist der Biegedorn 14 hingegen so rotiert, dass die Ebene, gegenüber der er biegesteif ist, mit der Ebene zusammenfällt, in der die Biegung liegt.

In den dargestellten Ausführungsformen ist der Biegedorn 14 durch eine Führungsstange 16 und einen Dornkopf 18 realisiert. Diese Zweiteiligkeit ist nicht zwingend erforderlich. Je nach Ausgestaltung kann die Führungsstange 16 kürzer oder länger ausfallen oder auch ganz weggelassen werden, d.h. der Biegedorn besteht dann nur aus den Elementen des Dornkopfs 18.

Weiter wurde der Einsatz des Biegedorns 14 an Hand einer Biegemaschine 2 erläutert, die das Rohrmaterial 4 seriell erwärmt, vorschiebt und biegt, d.h. einzelne Biegungen zeitlich nacheinander ausführt. Die Vorteile des Biegedorns 14 kommen jedoch gleichermaßen auch bei Biegemaschinen zu tragen, die zum Biegen das Rohrmaterial nicht bewegen und es zuvor über seine im Wesentlichen ganze Länge erwärmen. Beispiele sind Maschinen, die das zur Gänze erwärmte Rohrmaterial in eine Biegeform einlegt oder mit mehreren Roboterarmen hält und biegt. Auch hier muss das Rohrmaterial nach dem Erwärmen gestützt und beim Einlegen oder Biegen im Innenquerschnitt stabilisiert werden, wozu der umschaltbare Biegedorn 14 zum Einsatz kommt.

In den erläuterten Ausführungsformen wird der Biegedorn und insbesondere der Dornkopf 18 während des Biegens gegenüber dem Rohrmaterial 4 stationär gehalten und ist dabei biegeschlaff geschaltet (vgl. Fig. 10). Je nach Ausgestaltung der Biegemaschine ist es aber auch möglich, dass der biegeschlaff geschaltete Dornkopf 18 während des Biegeprozesses gegenüber dem Rohrmaterial 4 bewegt, beispielsweise langsam mit fortschreitender Biegung aus dem Rohrmaterial 4 herausgezogen wird. Dies wird insbesondere realisiert bei einer Biegemaschine, die das erwärmte Rohrmaterial in eine nach oben offene Biegeform einlegt. Hierbei kann es von Vorteil sein, abgestimmt mit dem fortschreitenden Einlegen den Dornkopf aus dem Rohrmaterial herauszuziehen. Alternativ kann der biegeschlaff geschaltete Dornkopf sich über die gesamte Länge des Rohrmaterials, das in die Biegeform eingelegt wird, erstrecken und wird erst aus dem erwärmten Rohrmaterial herausgezogen, nachdem dieses vollständig in die Biegeform eingelegt wurde. In beiden Fällen ist der Dornkopf zum Abstützen des erwärmten Rohrmaterials biegesteif geschaltet, während das erwärmte Rohrmaterial transportiert wird, beispielsweise zur Biegeform. Gleiches gilt auch für eine Ausgestaltung, bei der das Rohrmaterial von Roboterarmen gehalten und von einem Ende her mit Biegungen versehen wird, ohne das es dabei gefördert wird. Auch in diesen Fällen ist es zweckmäßig, den Dornkopf in den Abschnitten biegeschlaff zu schalten, in denen gerade eine Biegung ausgeführt wird bzw. den biegeschlaff geschalteten Dornkopf mit fortschreitender Bearbeitung von dem Ende, an dem die Bearbeitung mit den Biegungen beginnt, langsam herauszuziehen, so dass der biegeschlaffe Dornkopf das Rohrmaterial im Innenquerschnitt immer genau dort stabilisiert, wo gerade eine Biegung ausgeführt wird. Am Ende des Prozesses ist der Dornkopf dann vollständig aus dem Rohrmaterial herausgezogen, das alle Biegungen erhalten hat. Auch hier ist zum Abstützen des erwärmten Rohrmaterials beim Transport der Dornkopf biegesteif geschaltet.

Soweit in dieser Beschreibung davon die Rede ist, dass der Dornkopf biegesteif geschaltet wird, ist darunter natürlich auch die Variante zu verstehen, dass zum Abstützen des erwärmten Rohrmaterials der Dornkopf, der in einer Ebene biegesteif ist, entsprechend so rotiert wird, dass die Ebene, in der der Dornkopf biegesteif ist, mit der Vertikalen zusammenfällt. Analog ist das Schalten in den biegeschlaffen Zustand dann so zu verstehen, dass der Dornkopf entsprechend rotiert wird, dass eine Ebene, in der er biegeschlaff ist, mit der Ebene einer aktuellen Biegung, bei der der Dornkopf das Rohrmaterial im Innenquerschnitt stabilisieren soll, zusammenfällt.

In beschriebenen Ausführungsformen ist die Schalteinrichtung, welche den Dornkopf biegesteif oder biegeschlaff schaltet, vollständig in den Dornantrieb integriert oder am Dornantrieb vorgesehen. Dies ist für die längs eines Maschinenbettes arbeitende Biegemaschine 2 der Fig. 1 auch vorteilhaft. In anderen Ausführungsformen kann es jedoch zweckmäßig sein, mind. einen Teil der Schalteinrichtung am Ende des Biegedorns unabhängig von der Biegemaschine vorzusehen, beispielsweise durch eine Rastvorrichtung, welche das Zugseil 22 im gespannten oder gelockerten Zustand oder die Stützeinrichtung (beispielsweise die Hülse 30) im vorgeschobenen oder zurückgezogenen Zustand jeweils verriegelt.

## Patentansprüche

1. Biegedorn für thermoplastisches, einen Innenquerschnitt aufweisendes Rohrmaterial (4), der einen Dornkopf (18), welcher einen biegesteifen Zustand aufweist, in dem er gegenüber einer Längsachse in mindestens einer Ebene biegbar ist, um während eines Biegevorgangs das Rohrmaterial (4) im Innenquerschnitt zu stabilisieren, aufweist,
**dadurch gekennzeichnet,**
**dass** eine Schalteinrichtung (26) vorgesehen ist, die auf den Dornkopf (18) wirkt und den Dornkopf (18) zum Abstützen des erwärmten Rohrmaterials (4) beim Transport in einen biegesteifen Zustand, in dem der Dornkopf (18) mindestens gegenüber der Vertikalen biegesteif ist, bringt.

2. Biegedorn nach Anspruch 1, **dadurch gekennzeichnet, dass** der Dornkopf (18) als Glieder- oder Schuppendorn ausgebildet ist und die Schalteinrichtung (27) ein Spannelement (22) aufweist, welches zur Herstellung des biegesteifen Zustands die Glieder oder Schuppen (20) miteinander verspannt.

3. Biegedorn nach Anspruch 2, **dadurch gekennzeichnet, dass** das Spannelement ein an der Spitze des Dornkopfes (24) befestigtes Führungsseil (22) ist, welches zum Herstellen des biegesteifen Zustands unter Zugspannung gesetzt ist.

4. Biegedorn nach einem der obigen Ansprüche, **dadurch gekennzeichnet, dass** der Dornkopf (18) ein von einer Schalteinrichtung (27) zur Aktivierung angesteuertes, in den Dornkopf (18) einschiebbares und/oder außen über den Dornkopf (18) aufschiebbares Stützelement (30, 38) aufweist, das im aktivierten Zustand den Dornkopf (18) in den biegesteifen Zustand versetzt, in dem der Dornkopf (18) in mehreren Ebenen, bevorzugt in jeder Ebene, entlang der Längsachse versteift ist.

5. Biegedorn nach Anspruch 4, **dadurch gekennzeichnet, dass** der Dornkopf (18) von einer Führungsstange (16), die die Längsachse festlegt, getragen ist und das Stützelement (30, 38) an der Führungsstange (16) gelagert ist und die Schalteinrichtung (27) das Stützelement (30, 38) zum Herstellen des biegesteifen Zustands längs der Längsachse von der Führungsstange (16) zum Dornkopf (18) vorschiebbar ist.

6. Biegedorn nach Anspruch 4 oder 5, **dadurch gekennzeichnet, dass** das Stützelement eine Hülse (30) ist, die den Dornkopf (18) außen umgreift.

7. Biegedorn nach einem der Ansprüche 4 bis 6, **dadurch gekennzeichnet, dass** das Stützelement (38) durch eine längserstreckte Öffnung (36) in einen Innenquerschnitt des Dornkopfs (18) einschiebbar ist.

8. Biegedorn nach einem der obigen Ansprüche, **dadurch gekennzeichnet, dass** der Dornkopf (18) ein sich längs der Längsachse erstreckendes und quer dazu elastisches Federelement mit einer sich ebenfalls längs der Längsachse erstreckenden Innenöffnung aufweist und die Schalteinrichtung eine Stützstange aufweist, die zum Herstellen des biegesteifen Zustands längs der Längsachse in die Innenöffnung einschiebbar ist.

9. Biegedorn nach einem der obigen Ansprüche, **dadurch gekennzeichnet, dass** der Dornkopf (18) in einer die Längsachse enthaltenden Ebene biegeschlaff und ansonsten biegesteif ist und die Schalteinrichtung (27) den biegesteifen Zustand zum Abstützen des erwärmten Rohrmaterials dadurch einstellt, dass sie den Dornkopf (18) so orientiert, dass diese Ebene im Wesentlichen senkrecht zur Vertikalen liegt, und während eines Biegevorgangs den biegeschlaffen Zustand dadurch einstellt, dass sie den Dornkopf (18) so orientiert, dass diese Ebene im Wesentlichen in einer Biegeebene liegt.

10. Biegedorn nach einem der obigen Ansprüche, **dadurch gekennzeichnet, dass** der Dornkopf (18) mindestens ein aktivierbares Aufweitungselement (40, 48) trägt, das, wenn aktiviert, den Außenquerschnitt des Biegedorns (14) vergrößert und zur Aufnahme von auf das Rohrmaterial (4) wirkenden Torsionskräften im Rohrmaterial (4) verspannt.

11. Biegedorn nach einer Kombination des Anspruchs 5 mit dem Anspruch 10, **dadurch gekennzeichnet, dass** eine Zugkraft, die das Spannelement (22) beim Verspannen des Dornkopfes (18) ausübt, das Aufweitungselement (40, 48) radial ausdehnt und dadurch aktiviert.

12. Biegemaschine mit einem Biegedorn nach einem der obigen Ansprüche, **dadurch gekennzeichnet, dass** sie eine Steuereinrichtung (12) aufweist, welche die Schalteinrichtung (27) ansteuert und den Dornkopf (18) in den biegesteifen Zustand schaltet, um erwärmtes Rohrmaterial (4) zu bewegen und dabei zu stützen.

13. Verfahren zum Biegen von thermoplastischem, einen Innenquerschnitt aufweisendem Rohrmaterial (4), das abschnittsweise in einer Biegestation (8) gebogen und während eines Biegevorgangs im Innenquerschnitt mit einem Biegedorn (14) abgestützt wird, wobei das Rohrmaterial (4) zuvor in dem als nächsten zu biegenden Abschnitt erwärmt und dann zur Biegestation (8) vorgeschoben wird,
**dadurch gekennzeichnet,**
**dass** das Rohrmaterial (4) während des Vorschubs im erwärmten Abschnitt von innen durch einen mindestens gegenüber der Vertikalen biegesteifen Abschnitt (18) des Biegedorns (14) abgestützt wird.

14. Verfahren nach Anspruch 13, **dadurch gekennzeichnet, dass** ein Biegedorn (14) nach einem das Ansprüche 1 bis 11 oder eine Biegemaschine nach Anspruch 12 verwendet wird.

15. Verfahren nach Anspruch 13, **dadurch gekennzeichnet, dass** ein Biegedorn (14) verwendet wird, der einen flexiblen Dornkopf (18) und eine starre Führungsstange (16) aufweist und zum Abstützen des erwärmten Abschnitts der Biegedorn (14) so eingestellt wird, dass die starre Führungsstange (16) im erwärmten Abschnitt des Rohrmaterials (4) liegt, wobei zum Biegen das Rohrmaterial (4) in einem Biegekopf eingespannt und abgestützt wird und dann der Biegedorn (14) so zurückgezogen wird, dass das bewegliche Ende im zu biegenden, erwärmten Abschnitt liegt, und anschließend das Rohrmaterial (4) im erwärmten Abschnitt gebogen wird.
